# EUROPEAN PATENT APPLICATION

(11) **EP 1 847 918 A2**
(43) Date of publication of application: **24.10.2007**
(21) Application number: 07101278.5
(22) Date of filing: 26.01.2007
(51) Int. Cl.: G06F 3/048

(54) **Method and apparatus for displaying content list**

(30) Priority: 21.04.2006 KR 20060036339
(71) Applicant: Samsung Electronics Co., Ltd., Suwon-si 442-742 Gyeonggi-do (KR)
(72) Inventor: Choi, Yoo-jin, Seoul (KR)
(74) Representative: Davies, Robert Ean

(57) **Abstract**

A method and apparatus are provided for displaying a content list for conveniently searching content. A method of displaying a content list classified into a plurality of categories, the method includes displaying a first content list on a screen; receiving (302) a command; and displaying (304) a second content list on the screen based on the type of command received. The second content list is different from the first content list with respect to a category from among the plurality of categories.

## Description

Methods and apparatuses consistent with the present invention relate to a user interface, and more particularly, but not exclusively to displaying a content list for conveniently searching content.

The use of multimedia content has recently increased, and accordingly, related apparatuses are rapidly being supplied. Also, a large amount of content is used due to the development of transmission and storage techniques. Conventionally, content can be classified into several categories, such as storage locations, type of contents, etc. Users can search for required content by using these categories.

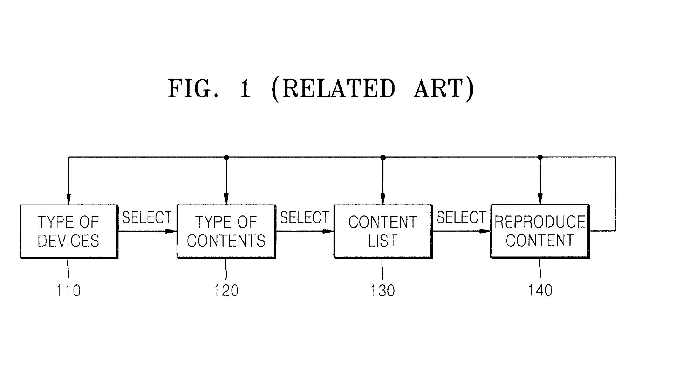

FIG. 1 is a diagram illustrating a related art method of displaying a content list.

Referring to FIG. 1, in order to reproduce the required content, a four-operation search process is performed. First, a target device is selected from several home network devices in operation 110. Next, the required type of content is selected in operation 120. Then the required content is selected from a content list in operation 130. Lastly, the content is reproduced in operation 140. Here, the target device is selected first, and then the type of content is selected. However, the type of content may be selected first and then the target device may be selected.

In any case, at least three operations are performed to reproduce the required content. If the outputted content list does not display the required content after the three operations are performed, the four-operation search process is be repeated.

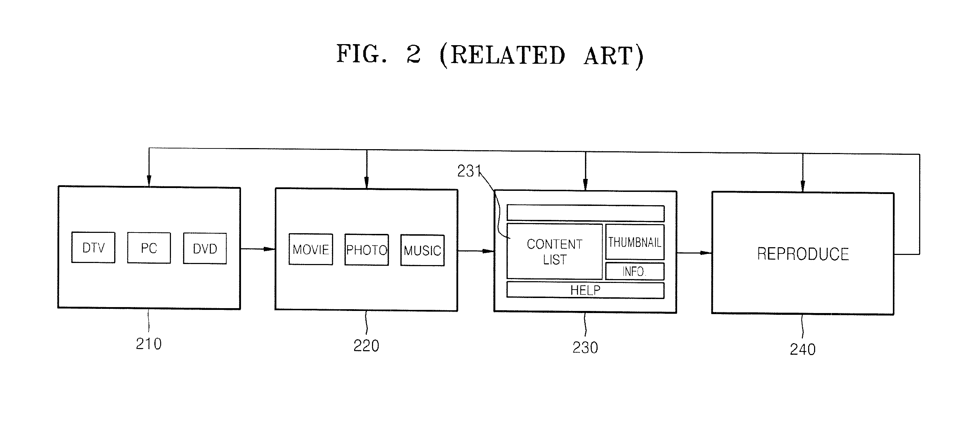

FIG. 2 is an example of a screen according to another conventional method of displaying a content list.

Referring to FIG. 2, the other conventional method of displaying the content list is performed by four operation screens. The four operation screens include a screen 210 for selecting the type of device, such as a digital TV (DTV), a personal computer (PC), a digital versatile disc (DVD), etc.; a screen 220 for selecting the type of content, such as movies, photos, music, etc.; a screen 230 outputting a content list 231 corresponding to the type of content selected; and a screen 240 reproducing the content selected from the content list 231.

When several content storing devices are connected to each other, when there is a large amount of content, and when the content is classified into several categories, a conventional search process that uses categories requires several operations, which is very inconvenient.

Embodiments of the present invention provide a method and apparatus for displaying a content list, which enable access to a required content list without performing several content search processes.

Exemplary embodiments of the present invention aim to overcome the above disadvantages and other disadvantages not described above. Also, embodiments of the present invention are not required to overcome the disadvantages described above, and an exemplary embodiment of the present invention may not overcome any of the problems described above.

According to an aspect of the present invention, there is provided a method of displaying a content list classified into a plurality of categories, the method including: receiving a command; and displaying a content list on a screen, wherein the content list is different from a content list already displayed on the screen in a predetermined category from among the plurality of categories based on the type of command received.

The displaying of the content list may include: generating and displaying a content list which is the same as the content list displayed on the screen in a second category but different from the content list displayed on the screen in a first category, when a first type command is received; and generating and displaying a content list which is the same as the content list displayed on the screen in the first category but different from the content list displayed on the screen in the second category, when a second type command is received.

The first category may represent content storing devices and the second category may represent types of content.

The first type command may be generated when a first type direction key in an input device is pressed and the second type command may be generated when a second type direction key in the input device is pressed.

The method may further include displaying menu information on category items from among the plurality of categories, on the screen.

The method may further include displaying information on at least one category item, which the content list displayed on the screen belongs to, on the screen in such a way that the at least one category item is distinguished from other category items.

The method may further include displaying a content list, which the content reproduced belongs to, on the screen when a command to display a menu is received.

According to another aspect of the present invention, there is provided an apparatus for displaying a content list classified into a plurality of categories, the apparatus including: an output unit displaying the content list; an input unit receiving an input command from; and a control unit controlling display of a content list on the output unit, wherein the content list is different from a content list already displayed on the screen in a predetermined category from among the plurality of categories based on the type of command received from the input unit.

The apparatus may further include an interface unit communicating with at least one content storing device, wherein the control unit controls the display of information on contents stored in the at least one content storing device, through the interface unit, on the output unit.

For a better understanding of the invention, and to show how embodiments of the same may be carried into effect, reference will now be made, by way of example, to the accompanying diagrammatic drawings in which:
FIG. 1 is a diagram illustrating a related art method of displaying a content list;
FIG. 2 is an example of a screen according to another conventional method of displaying a content list;
FIG. 3 is a flowchart illustrating a method of displaying a content list according to an exemplary embodiment of the present invention;
FIG. 4 is a flowchart illustrating a method of displaying a content list according to another exemplary embodiment of the present invention;
FIG. 5 is an example of a screen according to a method of displaying a content list according to an exemplary embodiment of the present invention;
FIG. 6 is an example of a screen according to a method of displaying a content list according to another exemplary embodiment of the present invention;
FIG. 7 is an example of an operation according to a method of displaying a content list according to an exemplary embodiment of the present invention; and FIG. 8 is a block diagram illustrating an apparatus for displaying a content list according to an exemplary embodiment of the present invention.

Hereinafter, the present invention will be described more fully with reference to the accompanying drawings, in which exemplary embodiments of the invention are shown.

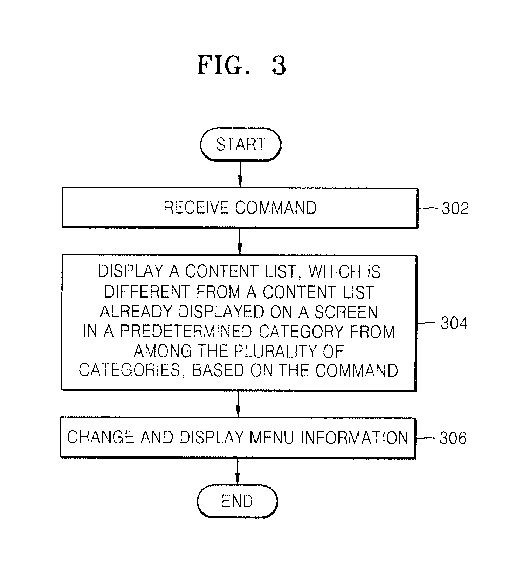

FIG. 3 is a flowchart illustrating a method of displaying a content list according to an exemplary embodiment of the present invention. Content can be classified into a plurality of categories. The plurality of categories may include a first category that represents content storing devices and a second category that represents type of content. The content list displayed may include information on contents, which are stored in a certain content storing device and belong to a certain type of content.

Referring to FIG. 3, a command is received in operation 302. When a search command is received while a first content list is displayed on a screen, a second content list for a different category is displayed in operation 304, based on the type of command received. When the command received is a command to change one category from among a plurality of categories, a content list, which is the same with respect to other categories but is different with respect to the one category, is displayed on the screen.

For example, if content is classified into a first category to distinguish a plurality of hard discs (for example, HDD-1, HDD-2, HDD-3) and a second category to distinguish the type of contents (for example, jpg files, gif files, bmp files), a content list corresponding to jpg files stored in HDD-1 is displayed on a screen. When a right key signal is inputted through a remote control, and the inputted signal represents a later category item which belongs to the second category, the content list displayed on the screen changes into a content list corresponding to gif files stored in HDD-1. Accordingly, the changed content list can be immediately provided without requiring multiple operations for changing categories. The number of categories is not limited to two as described above, and the type of categories is also not specifically limited.

For more convenience, menu information can also be displayed on the screen, and when the content list is changed, the menu information can be changed accordingly in operation 306. The menu information is information pertaining to category items which belong to each category. Referring to the above example, menu information corresponding to the category items HDD-1, HDD-2, and HDD-3 of the first category and/or the category items jpg files, gif files, and bmp files of the second category can be displayed on the screen. Moreover, the category items, HDD-1 and gif files, that belong to the content list displayed on the screen, are displayed in such a way that they are distinguished from other category items. Thus, a browsing location is easily found.

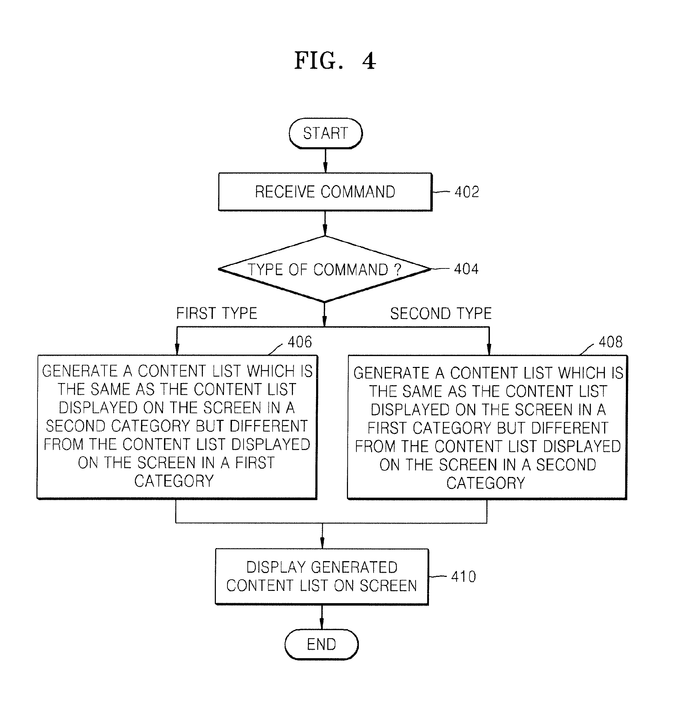

FIG. 4 is a flowchart illustrating a method of displaying a content list according to another exemplary embodiment of the present invention.

Referring to FIG. 4, a command is received in operation 402 and the type of command received is recognized in operation 404. Based on the type of command received, a content list is generated and displayed. The current exemplary embodiment classifies a content list into two categories. There are two types of commands; these commands are used to command a change in each category. That is, when a first type command is received, a content list which is the same as the content list displayed on the screen in a second category but different from the content list displayed on the screen in a first category is generated in operation 406. When a second type command is received, a content list, which is the same as the content list displayed on the screen in the first category but different from the content list displayed on the screen in the second category, is generated in operation 408. Accordingly, the newly generated content list is displayed instead of the content list previously displayed on the screen in operation 410.

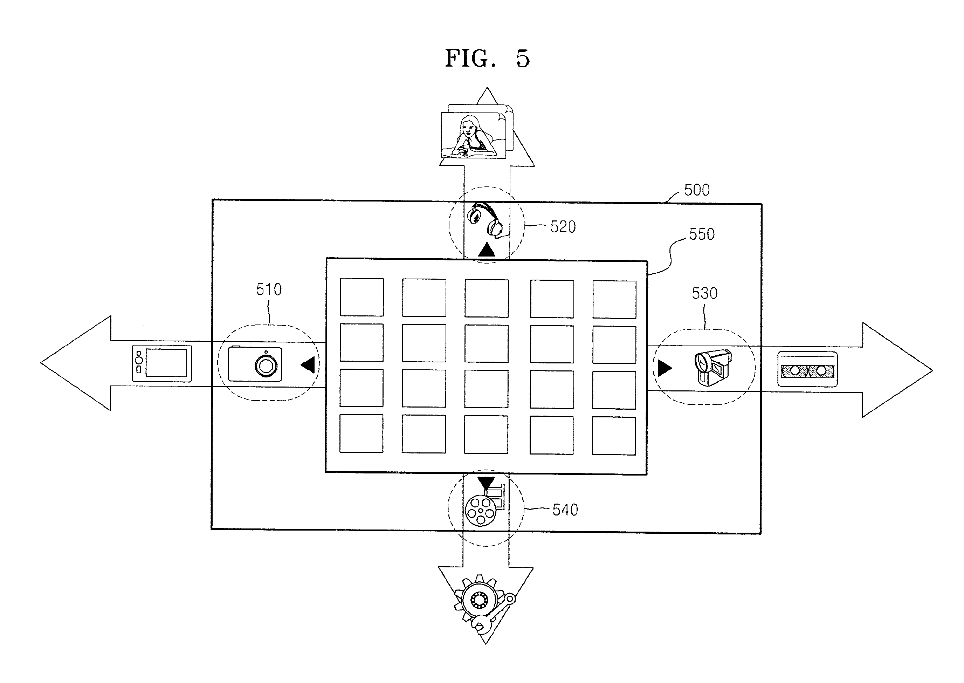

FIG. 5 is an example of a screen according to the method of displaying a content list, as described above.

In the current exemplary embodiment, categories classifying content are content storing devices and the type of contents. Also, right and left keys are commands to change devices and up and down keys are commands to change the type of contents.

Referring to FIG. 5, a content list screen 500 may be displayed when a command to display a menu is received while the system is operating or content is being reproduced on a screen. According to a conventional method of displaying a content list, when a menu button is pressed while content is being reproduced, a category selection menu is displayed on the screen. However, according to the current exemplary embodiment, a content list, to which the content being reproduced belongs, is displayed on the screen. The content list may be the same content list from which the content being reproduced was selected.

In FIG. 5, a content list 550 is a list in thumbnail form. However, the form of the content list 550 is not limited thereto, and the content list 550 may be in text form. Also, the current exemplary embodiment displays information on prior category items 510 and 520, and information on later category items 530 and 540, which can be browsed on the screen. In other words, information 510 represents that the device, which is in the first category, can be changed to a camera when the left key is pressed, information 530 represents that the device can be changed to a camcorder when the right key is pressed, information 520 represents that the type of content, which is in the second category, can be changed to audio when the up key is pressed, and information 540 represents that the type of content can be changed to a movie when the down key is pressed. Also, although it is not shown, information about the type of devices and the type of content to which the content stored in the content list 550 belongs may be displayed on the screen.

Referring to FIG. 5, when the right and left keys are used, the type of content (second category) is maintained while the type of device (first category) is changed. When the up and down keys are used, the type of device (first category) is maintained while the type of content (second category) is changed. When the down key is pressed, a command to change the content list 550 displayed on the content list screen 500 into the later type of content is received, thereby displaying the content list of stored movies. As described above, content lists for other categories may be displayed by only one operation using the direction keys employed by an input device, such as a remote control or the like. The input device and function of the direction keys are not limited thereto, and may differ in form and detail.

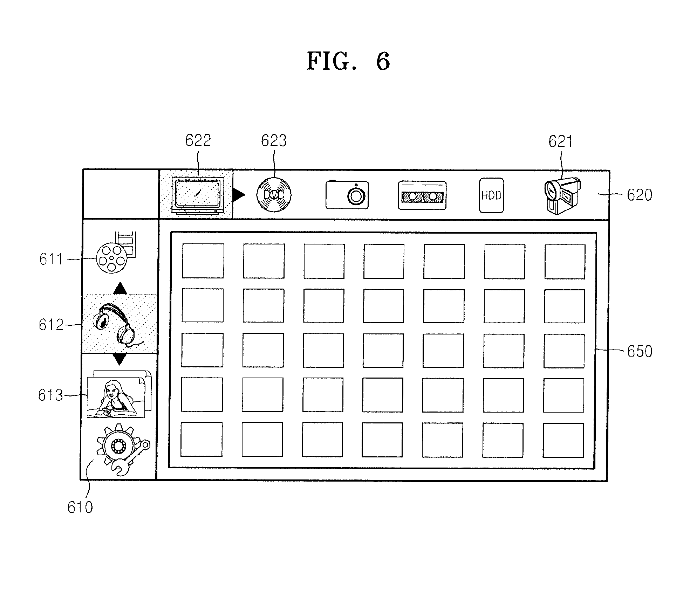

FIG. 6 is another example of a screen according to the method of displaying a content list, as described above.

Referring to FIG. 6, when a command to display a menu is received while the system is operating or content is being reproduced, a content list 650 is displayed on the screen. A focus can be controlled so as to be on the content list 650 in order to quickly select and reproduce other content besides the content being reproduced. In the current exemplary embodiment, menu information on category items that belong to the first category (type of device) is shown on the upper portion 620 of the screen and menu information on category items that belong to the second category (type of content) is shown on the left portion 610 of the screen. FIG. 6 shows that the content list 650 displayed on the screen includes contents corresponding to audio 612 stored in a PMP (portable media player) 622. When the right and left keys are pressed, content lists of the audio 612 stored in a camcorder 621 or DVD 623 are respectively generated and displayed. When up and down keys are pressed, content lists of movies 611 or pictures 613 stored in PMP 622 are respectively generated and displayed.

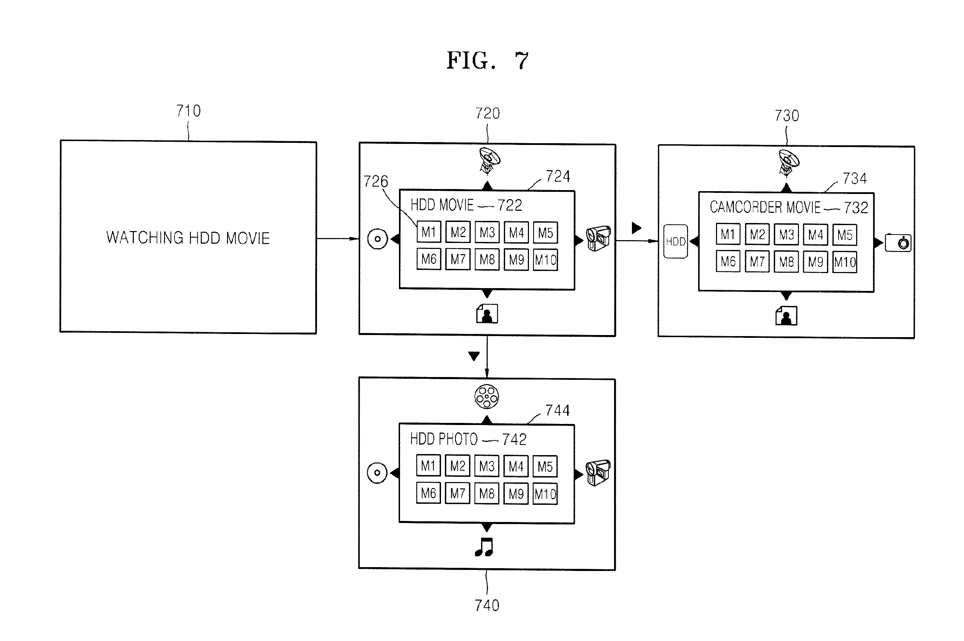

FIG. 7 is an example of an operation according to the method of displaying a content list described above, which illustrates screen changes when a command is received on the screen shown in FIG. 5.

Referring to FIG. 7, in a first screen 710, a movie stored in a HDD (hard disc drive) is being reproduced. When a menu button is pressed, a content list 724 of movies stored in the HDD is displayed on a second screen 720. Here, a first item 726 of the content list 724 may be a thumbnail corresponding to the content that is reproduced in the first screen 710. Also, information 722 indicates that the content list 724 reproduced on the second screen 720 is the content list of movies stored in the HDD. When a right key is pressed in the second screen 720, a content list 734, in which the type of content is the same but the type of device is changed to a camcorder, is displayed on a third screen 730. Also, information 732 indicates that the content list 734 is the content list of movies stored in the camcorder.

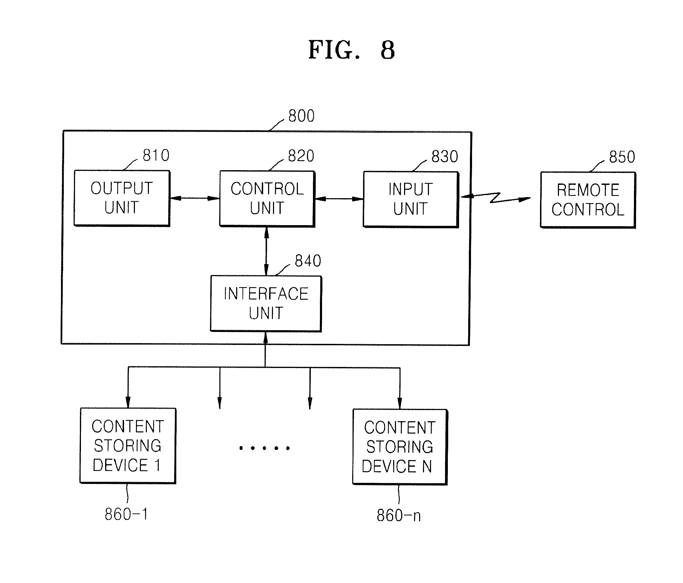

When a down key is pressed in the second screen 720, a content list 744, in which the type of device is the same but the type of content is changed to pictures, is displayed on a fourth screen 740. Also, information 742 indicates that the content list 744 is the content list of pictures stored in the HDD. FIG. 8 is a block diagram illustrating an apparatus for displaying a content list 800 according to an exemplary embodiment of the present invention.

Referring to FIG. 8, the apparatus for displaying a content list 800 includes an output unit 810 that displays a user interface including a content list, an input unit 830 that receives a command, and a control unit 820 controlling a display of a content list stored in a certain category from among the plurality of categories on the output unit 810 based on the type of command received from the input unit 830, wherein the content list is different from a content list displayed on a screen. The control unit 820 controls the display of the user interface on the output unit 810 using the method of displaying a content list, as described above.

In the case of a home network, the apparatus for displaying a content list 800 may further include an interface unit 840 for communicating with at least one content storing device. The control unit 820 communicates with the content storing devices 860-1 to 860-n through the interface unit 840. The control unit 820 controls the display and reproduction of a content list stored in the content storing devices 860-1 to 860-n

Also, an input device 850, such as a remote control or the like, receives an input signal and transfers the input signal to the input unit 830. The control unit 820 analyzes the input signal received from the input unit 830 in order to recognize the corresponding command. According to the command, the control unit 820 changes and displays a content list.

The method of displaying a content list, as described above, can be employed in a code of a recording medium which can be read by a computer.

The exemplary embodiments of the present invention maximize the convenience for a user by providing a content list without undergoing a category search process while searching for content classified into a plurality of categories.

Also, required content can be quickly and easily found by omitting a process of selecting one content storing device from a plurality of content storing devices and omitting a process of selecting required content from several types of contents.

In addition, a content list stored in other categories can be easily provided by using only direction keys.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a content list classified into a plurality of categories, the method comprising:
displaying a first content list on a screen;
receiving (302) a command; and
displaying (304) a second content list on the screen based on the type of command received, wherein the second content list is different from the first content list with respect to a category from among the plurality of categories.

2. The method of claim 1, wherein the displaying of the second content list comprises:
generating (406) and displaying (410) a content list which is the same as the first content list with respect to a second category but different from the first content list with respect to a first category, if a first command is received; and
generating (408) and displaying (410) a content list which is the same as the first content list with respect to the first category but different from the first content list with respect to the second category, if a second command is received.

3. The method of claim 2,
wherein the first category represents content storing devices (860); and
wherein the second category represents types of content.

4. The method of claim 2 or 3,
wherein the first command is generated if a first direction key in an input device (850) is pressed; and
wherein the second command is generated if a second direction key in the input device is pressed.

5. The method of claim 4, wherein the first direction key is one of right and left keys and the second direction key is one of up and down keys.

6. The method of any preceding claim, further comprising displaying (306) menu information pertaining to category items from among the plurality of categories, on the screen.

7. The method of claim 6, further comprising displaying information pertaining to at least one category item, to which the second content list displayed on the screen belongs, on the screen in such a way that the at least one category item is distinguished from other category items.

8. The method of any preceding claim, further comprising displaying information pertaining to at least one category item, to which the second content list displayed on the screen belongs, on the screen.

9. The method of any of claims 2-8, further comprising displaying on the screen information pertaining to prior and later category items of the category item in the first category, to which the second content list displayed on the screen belongs, and/or pertaining to prior and later category items of the category item in the second category, to which the second content list displayed on the screen belongs.

10. The method of claim 9, further comprising displaying information pertaining to the category item in the first category, to which the second content list displayed on the screen belongs, and pertaining to the category item in the second category, to which the second content list displayed on the screen belongs, on the screen

11. The method of any preceding claim, wherein the displaying of the second content list comprises displaying a list, to which the content reproduced belongs, on the screen if the received command is a command to display a menu.

12. An apparatus (800) for displaying a content list classified into a plurality of categories, the apparatus comprising:
an output unit (810);
an input unit (830) that receives an input command; and
a control unit (820) that controls display of a second content list on the output unit based on a type of command received from the input unit, wherein the content list is different from a first content list already displayed on the output unit with respect to a category from among the plurality of categories.

13. The apparatus of claim 12, wherein the control unit (820) controls the display of the second content list by:
generating and displaying a content list which is the same as the first content list with respect to a second category but different from the first content list with respect to a first category, if a first type command is received; and
generating and displaying a content list which is the same as the first content list with respect to the first category but different from the first content list with respect to the second category, if a second type command is received.

14. The apparatus of claim 13 further comprising an interface unit (840) that communicates with at least one content storing device (860),
wherein the control unit (820) controls a display of information pertaining to contents stored in the at least one content storing device, the information being received through the interface unit and displayed on the output unit (810).

15. The apparatus of claim 14,
wherein the first category represents content storing devices; and
wherein the second category represents types of content.

16. The apparatus of claim 15,
wherein the control unit (820) receives a first command when a first direction key signal is input through the input unit; and
wherein the control unit receives a second command when a second direction key signal is input through the input unit.

17. The apparatus of claim 16, wherein the first type direction key is one of right and left keys and the second type direction key is one of up and down keys.

18. The apparatus of claim 16 or 17, wherein the input unit receives the first and second commands from a remote control (850).

19. The apparatus of any of claims 12-18, wherein the control unit (820) controls a display of menu information, pertaining to category items from among the plurality of categories, on the output unit.

20. The apparatus of claim 19, wherein the control unit controls a display of information pertaining to a category item, to which the second content list displayed on the output unit belongs, on the output unit in such a way that the category item is distinguished from other category items.

21. The apparatus of any of claims 12-20, wherein the control unit controls the display of information pertaining to at least one category item, to which the second content list displayed on the output unit belongs, on the output unit.

22. The apparatus of any of claims 13-21, wherein the control unit (820) controls a display of output unit information pertaining to prior and later category items with respect to the category item in the first category, to which the second content list displayed on the output unit belongs, and/or pertaining to prior and later category items of the category item in the second category, to which the content list displayed on the output unit belongs.

23. The apparatus of any of claim 13-22, wherein the second content list comprises a list, to which reproduced content belongs, if the command is a command to display a menu that is received while the content is being reproduced.
